# EUROPEAN PATENT SPECIFICATION

(11) **EP 4 205 145 B1**
(45) Date of publication and mention of the grant of the patent: **19.06.2024**
(21) Application number: 21773230.4
(22) Date of filing: 25.08.2021
(51) Int. Cl.: G21G 1/00, A61J 1/05, A61J 1/14, B04C 3/06

(54) **CONTAINER CLOSURE INCLUDING VORTEX-GENERATING FEATURE**
BEHÄLTERVERSCHLUSS MIT WIRBELERZEUGUNGSFUNKTION
FERMETURE DE CONTENANT COMPRENANT UN ÉLÉMENT GÉNÉRANT UN TOURBILLON

(30) Priority: 31.08.2020 US 202063072641 P
(43) Date of publication of application: 05.07.2023
(73) Proprietor: Curium US LLC, St. Louis, MO 63146 (US)
(72) Inventor: RADFORD, Lauren, St. Louis, Missouri 63146 (US); SHAHANOV, Valery, St. Louis, Missouri 63146 (US); MICKA, Alex, St. Louis, Missouri 63146 (US)
(74) Representative: Jones, Nicholas Andrew
(86) International application number: PCT/US2021/047564
(87) International publication number: WO 2022/046915

(56) References cited:
- EP-A1- 3 682 920
- WO-A1-2004/052496
- WO-A1-2020/117524
- GB-A- 2 497 944

## Description

### CROSS-REFERENCE TO RELATED APPLICATIONS

This application claims priority to U.S. Provisional Patent Application Serial No. 63/072,641, filed August 31, 2020.

### FIELD

The field of the disclosure relates generally to production of radionuclides and, more particularly, to a container closure for use in systems and methods for preparing radionuclide solutions.

### BACKGROUND

Radiopharmaceuticals, drugs that incorporate a radioactive element (i.e., a radionuclide), are used in nuclear medicine for diagnostic and/or therapeutic purposes. Radionuclides typically used in nuclear medicine include technetium-99m (Tc-99m), indium-111 (In-111), thallium-201 (TI-201), fluorine-18 (F-18), and copper-64 ("Cu-64"), among others. Radionuclides may be produced naturally, or via decay of a long-lived parent (i.e., a radionuclide generator), or by direct production (e.g., proton- or neutron-induced reaction). In the production of at least some radionuclides and radiopharmaceuticals, it is desirable to concentrate a radionuclide precursor solution to dryness or near-dryness. In production methods where a radionuclide precursor is isolated in a strong acid or organic solvent, solvent evaporation is often used as the penultimate step before final reconstitution of the precursor in a biocompatible solvent, either for direct injection or incorporation into a biomolecule (e.g., monoclonal antibody). In the case of radiopharmaceutical production, purification of a radiopharmaceutical agent using a reversed-phase C18 column may require subsequent removal of a bioincompatible organic solvent (e.g., acetonitrile). Accordingly, a need exists for processes and apparatuses that facilitate concentrating liquid radionuclide precursor solutions to dryness or near-dryness.

This Background section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art. Examples of prior art containers and closures can be found in patent document EP 3,682,920 A1 or WO 2020/117524 A1.

### BRIEF SUMMARY

In one aspect, a closure includes a body extending longitudinally along a central longitudinal axis from a first, upper surface to a second, lower surface. The body defines a cavity extending into the body from the lower surface to a third, interior surface. The cavity is sized and shaped to receive a portion of a container therein. The body includes a shroud extending from the interior surface to the lower surface, and a container insert depending from the interior surface and positioned within the cavity. The container insert is sized and shaped to fit within an opening of the container. The body further includes an outlet flow path in fluid communication with the cavity, and at least one inlet flow path in fluid communication with the cavity. The at least one inlet flow path is positioned and oriented to generate a vortex gas flow within the container when connected thereto. Each of the at least one inlet flow path is oriented at an oblique angle relative to the central longitudinal axis of the body, and radially offset from the central longitudinal axis.

In another aspect, a system includes a radiation containment chamber, a remote manipulator connected to the radiation containment chamber, a container positioned within an interior of the radiation containment chamber, a closure, as defined in claim 1, connected to the container and including a body including an outlet flow path and at least one inlet flow path, an evaporation station positioned within the interior of the radiation containment chamber and including at least one heating element for applying heat to the container, and a gas handling system including a suction line connected to an outlet of the outlet flow path. The at least one inlet flow path of the closure generates a vortex gas flow within the container when suction is applied to the container by the suction line.

In yet another aspect, providing, within a radiation containment chamber, a container having a radioactive liquid disposed therein, and connecting, using a remote manipulator, a closure, as defined in claim 1, to the container such that the closure seals against the container. The closure includes at least one inlet flow path and an outlet flow path. The method further includes directing a flow of gas through the at least one inlet flow path of the closure to generate a vortex gas flow within the container.

Various refinements exist of the features noted in relation to the above-mentioned aspects. Further features may also be incorporated in the above-mentioned aspects as well. These refinements and additional features may exist individually or in any combination. For instance, various features discussed below in relation to any of the illustrated embodiments may be incorporated into any of the above-described aspects, alone or in any combination.

### BRIEF DESCRIPTION OF THE DRAWINGS

FIG. 1 is a schematic view of an example system for preparing radionuclide solutions.
FIG. 2 is a cross-sectional view of an example container assembly suitable for use with the system of FIG. 1
FIG. 3 is a perspective cutaway view of the example closure shown in FIG. 2.
FIG. 4 is a cross-sectional view of the closure shown in FIG. 2, taken along line "4-4" in FIG. 3.
FIG. 5 is another cross-sectional view of the closure shown in FIG. 2, taken along the same plane as the cut-away view of FIG. 3.
FIG. 6 is a bottom plan view of the closure shown in FIG. 2.

Corresponding reference characters indicate corresponding parts throughout the several views of the drawings.

### DETAILED DESCRIPTION

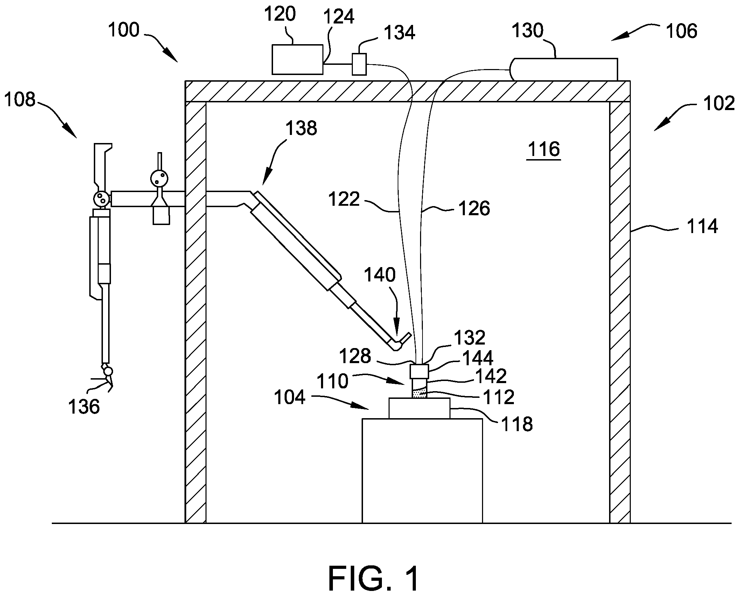

FIG. 1 is a schematic view of a system 100 for preparing radionuclide solutions. The system 100 shown in FIG. 1 may be used to prepare or otherwise process various radioactive solutions, including, for example and without limitation, solutions containing non-volatile species or complexes of F-18, Sc-43, Sc-44, Sc-47, Ti-44, Ti-45, Co-55, Cu-64, Cu-67, Ge-68, Ga-68, Rb-82, Sr-82, Sr-89, Sr-87m, Zr-89, Y-86, Y-90, Mo-99, Tc-99m, In-111, 1-123, 1-125, 1-131, Sm-153, Lu-177, Re-186, Re-188, Au-198, TI-201, Pb-203, At-211, Ra-223, and Ac-225. The system 100 generally includes a nuclear radiation containment chamber 102, also referred to herein as a "hot cell", an evaporation station 104 enclosed within the radiation containment chamber 102, a gas handling system 106, a remote manipulator 108, and a container assembly 110 having a radioactive liquid 112 contained therein. Examples of radioactive liquids 112 that can be used in the system 100 include liquids used in the preparation of radionuclides (e.g., a radioactive solution or radionuclide precursor solution), or other radioactive liquids, such as radiolabeled compounds (e.g., radiopharmaceutical agents or complexed radioactive precursors).

The evaporation station 104 and container assembly 110 are enclosed within the containment chamber 102 to shield operators from nuclear radiation emitted by radioactive materials within the containment chamber 102 (e.g., radioactive liquid 112). The containment chamber 102 generally includes an enclosure 114 constructed of nuclear radiation shielding material designed to shield the surrounding environment from nuclear radiation. The enclosure 114 defines an interior 116 in which the evaporation station 104 is positioned. Suitable shielding materials from which the containment chamber 102 may be constructed include, for example and without limitation, lead, depleted uranium, and tungsten. In some embodiments, the containment chamber 102 is constructed of steel-clad lead walls forming a cuboid or rectangular prism. Further, in some embodiments, the containment chamber 102 may include a viewing window constructed of a transparent shielding material. Suitable materials from which viewing windows may be constructed include, for example and without limitation, lead glass.

The evaporation station 104 includes one or more devices to evaporate the radioactive liquid 112. Suitable devices for use in the evaporation station 104 include, for example and without limitation, heating elements, such as hot plates, resistive heaters, fluid-based heaters or heat exchanges, and gas-fired heaters. In the illustrated embodiment, the evaporation station 104 includes a hot plate 118 having a selectively-adjustable temperature that allows an operator to set a desired temperature to which the container assembly 110 and radioactive liquid 112 are heated during an evaporation process.

The gas handling system 106 is operable to supply and remove gas from the containment chamber 102, such as from within the evaporation station 104. In some embodiments, the gas handling system 106 is configured to remove gases and volatile compounds generated during an evaporation process at the evaporation station 104. The gas handling system 106 can include any suitable components that enables the gas handling system 106 to function as described herein, including, for example and without limitation, fluid conduits, pumps, pressurized-gas supplies, filters, traps, and combinations thereof.

In the illustrated embodiment, the gas handling system 106 includes a pump 120, a suction line 122 connected to an inlet 124 of the pump 120, and one or more gas supply lines 126. The pump 120 and associated electronics and controls are positioned outside of the radiation containment chamber 102 to shield the components from radiation. The pump 120 can generally include any suitable pump that enables the gas handling system 106 to function as described herein, including, for example and without limitation, a reciprocating pump, a rotary pump, a centrifugal pump, a positive displacement pump, and combinations thereof. The suction line 122 is connected to the inlet 124 of the pump 120, and includes an inlet end 128 that connects to the container assembly 110 to provide suction thereto. Each gas supply line 126 is connected to a pressurized gas source 130 (e.g., compressor, pressurized inert gas supply tanks, etc.), and includes an outlet end 132 that connects to the container assembly 110 to provide a flow of gas thereto. The suction line 122 and gas supply lines 126 can generally include any suitable fluid conduit that enables the gas handling the system 100 to function as described herein, including, for example and without limitation, tubes, hoses, pipes, and combinations thereof. Additionally, the suction line 122 and gas supply lines 126 can include rigid conduits, flexible conduits, and combinations thereof. The inlet end 128 of the suction line 122 and the outlet end 132 of each of the gas supply lines 126 can include suitable fluid couplers and/or adapters to facilitate connection to the container assembly 110. Suitable fluid couplers and adapters include, for example and without limitation, Luer fittings, threaded couplers, compression fittings, and combinations thereof.

The illustrated gas handling system 106 also includes a trap 134 connected to the suction line 122 upstream of the pump inlet 124. The trap 134 collects volatile species (e.g., HCl gas) and/or water vapor (e.g., using a desiccant) evaporated from the radioactive liquid 112 during the evaporation process, as well as small particulates entrained in the gas flow through the suction line 122.

The remote manipulator 108 is connected to the radiation containment chamber 102, and allows manipulation of objects (e.g., the container assembly 110) within the containment chamber 102 from a remote location, such as outside the containment chamber 102. Examples of remote manipulators suitable for use with the system 100 include telemanipulators, autonomous or semi-autonomous systems (e.g., robotic arms), and manual instruments that extend an operator's reach (e.g., long forceps). In the example embodiment, the remote manipulator 108 is illustrated in the form of a telemanipulator that allows an operator outside of the containment chamber 102 to manipulate objects (e.g., the container assembly 110) within the containment chamber 102. The telemanipulator can have any suitable telemanipulator configuration that enables the system 100 to function as described herein. In the illustrated embodiment the telemanipulator includes an operator handle or controller 136 positioned outside of the radiation containment chamber 102, an articulated arm 138 connected to the controller 136 and positioned within the containment chamber 102, and an end effector 140 positioned at a distal end of the articulated arm 138. The operator controller 136 can be used, for example, to control a position, orientation, and/or state (e.g., opened or closed) of the end effector 140. In some embodiments, the end effector 140 includes mechanical fingers or clamps that allow an operator to grip or clamp objects (e.g., the container assembly 110) within the radiation containment chamber 102. Although only one telemanipulator is shown in FIG. 1, the system 100 may include more than one telemanipulator. In some embodiments, for example, the system 100 includes two telemanipulators such that an operator can control one telemanipulator with their left hand, and another telemanipulator with their right hand. In yet other embodiments, the system 100 may include a combination of remote manipulators 108 (e.g., a telemanipulator and an autonomous robotic arm).

The container assembly 110 includes a container 142 and a cap or closure 144 connected to the container 142. The container 142 is generally configured to hold a volume of liquid therein. The container 142 may be sized to hold any suitable volume of the radioactive liquid 112 therein. In some embodiments, the container 142 is sized to hold a relatively small volume of the radioactive liquid 112 therein, such as less than 100 mL, less than 80 mL, less than 60 mL, less than 40 mL, less than 30 mL, less than 20 mL, or even less than 10 mL. In other embodiments, the container 142 may be sized to hold a volume of the radioactive liquid 112 greater than 100 mL. The container 142 is constructed of a chemically inert material, including, for example and without limitation, glass (borosilicate glass, Pyrex^{®}), quartz, polyoxymethylene (e.g., Delrin^{®}), polycarbonate, polytetrafluoroethylene (e.g., Teflon^{™}), polypropylene, and other plastics compatible with the solvent being evaporated.

The closure 144 is configured to seal against a portion of the container 142 when connected thereto to control the flow of gas within the container 142 during an evaporation process. In the example embodiment, the closure 144 is connected directly to the container 142. In other embodiments, the closure 144 can be connected to or otherwise include an adapter or peripheral component to facilitate connection to containers of varying shapes and sizes (e.g., containers with different sized and/or shaped openings). In some embodiments, for example, the closure 144 is connectable to a plurality of different adapters, each sized and shaped to fit a different container such that the closure 144 is connectable to and usable with a plurality of different containers (e.g., vials, centrifuge tubes, round bottom flasks, etc.). The closure 144 of the illustrated embodiment is designed to facilitate evaporation of the radioactive liquid 112 within the container 142. For example, as described further herein, the closure 144 includes at least one vortex-generating feature that generates a vortex and associated centrifugal forces within the container 142 during the evaporation process, increasing the surface area of the liquid 112 and thereby accelerating the evaporation process.

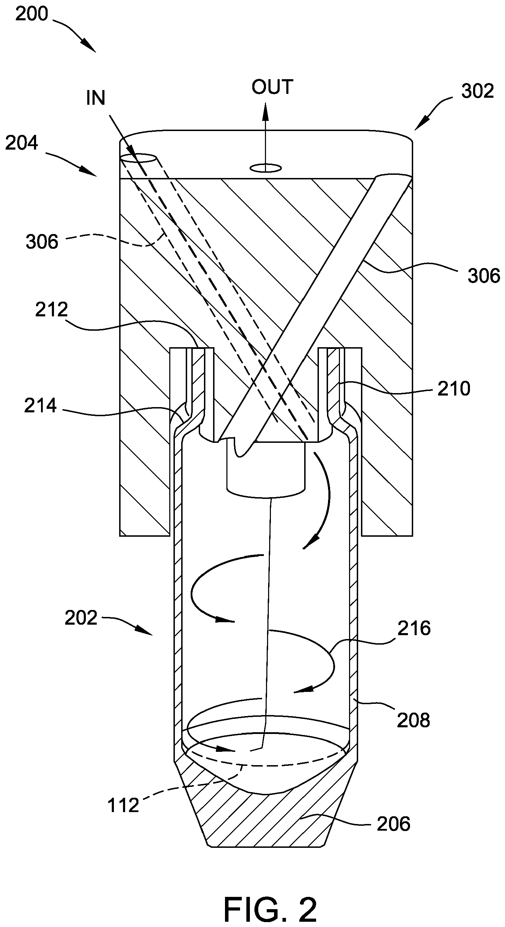

FIG. 2 is a cross-sectional view of an example container assembly 200, including a container 202 and a closure 204, suitable for use with the system 100 of FIG. 1. The container 202 of the illustrated embodiment generally includes a bottom 206, a sidewall 208 extending upward from the bottom 206, and a neck 210 defining an opening 212 at a top of the container 202. In the example embodiment, the sidewall 208 extends from the bottom 206 to the neck 210, and joins the neck 210 at a rounded shoulder portion 214 where the container 202 transitions from a larger diameter along the sidewall 208 to a smaller diameter along the neck 210. In other embodiments, the sidewall 208 and the neck 210 may have the same diameter, and the container 202 may not have a shoulder portion 214.

During an evaporation process, the container 202 having a volume of the radioactive liquid 112 (shown in broken lines in FIG. 2) contained therein is positioned within the containment chamber 102. The closure 204 is connected to the container 202, using the remote manipulator 108, to cover or occlude the container opening 212, and the suction line 122 and/or gas supply lines 126 are connected to the closure 204. The container 202 is positioned at the evaporation station 104 (e.g., on and/or adjacent to the hot plate 118), and heat is applied to the container 202 while gas is fed to and/or evacuated from the container 202 via the gas handling system 106.

The closure 204 seals against a portion of the container (e.g., the sidewall 208 and/or the neck 210), thereby providing a closed system to inhibit or prevent the introduction of environmental contaminants (e.g., trace metallic contaminants) into the container 202. Additionally, the closure 204 provides a dedicated path for collection of gases and other volatile species evaporated during the evaporation processes via the gas handling system 106. Compounds evaporated from the radioactive liquid 112 can be highly corrosive (e.g., HCl gas and water) and cause corrosion of components within the containment chamber 102, and/can accumulate and be released in unwanted areas if not properly collected and disposed of. As described in greater detail herein, the closure 204 also facilitates the evaporation process by increasing the rate of evaporation. In particular, embodiments of the closures described herein are configured to introduce gas flow into the container 202 in such a way that the liquid 112 is stirred in a vortex motion, thereby increasing the surface area of the liquid 112 and accelerating the evaporation rate.

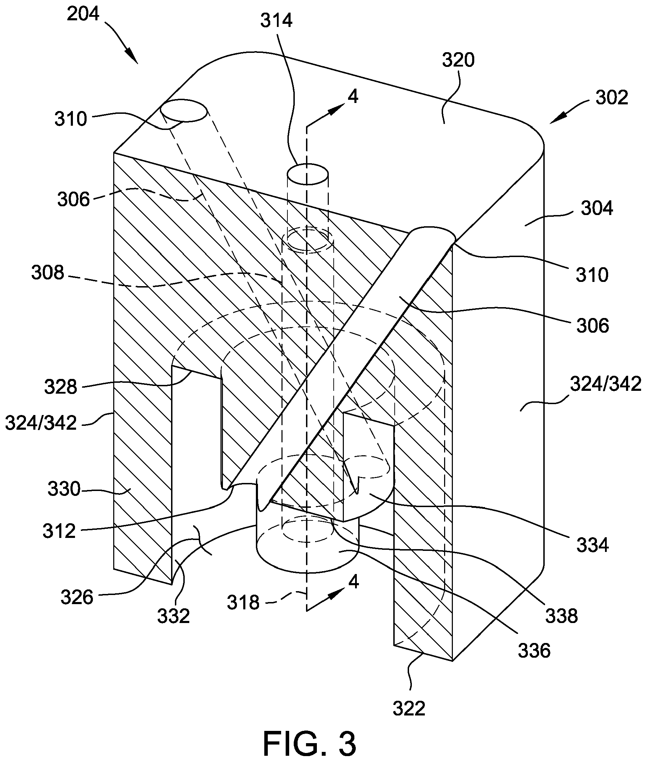

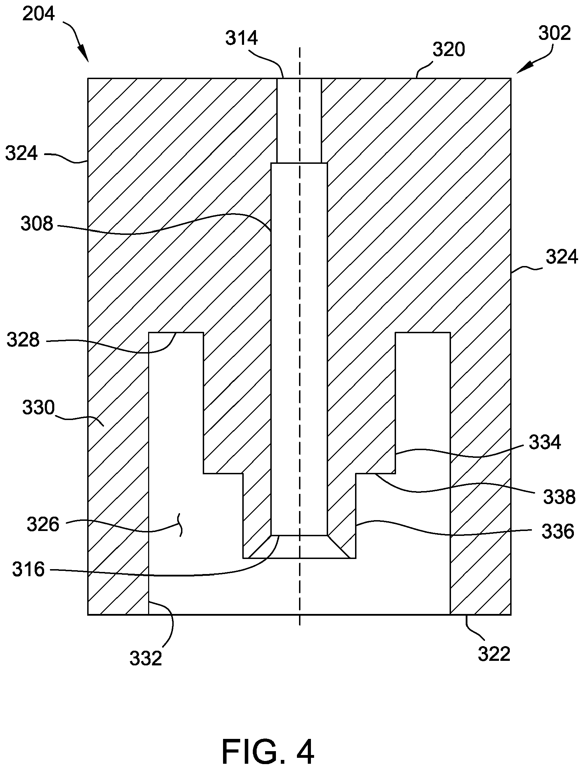

The closure 204 may have any suitable construction that enables the system 100 and container assembly 200 to function as described herein. With additional reference to FIGS. 3-6, the closure 204 generally includes a body 302 having an exterior surface 304, and at least one inlet flow path 306 and an outlet flow path 308 defined therein. In the example embodiment, the inlet flow path or paths 306 are vortex-generating features. More specifically, the inlet flow paths 306 are configured (e.g., positioned and oriented) to generate a vortex gas flow (illustrated by arrows 216 in FIG. 2) within the container 202 when connected thereto and gas is directed through the inlet flow paths 306 (e.g., via the gas handling system 106). The inlet flow paths 306 also help prevent bubbling of liquid contained within the container 202, for example, by preventing or limiting the container 202 being placed under high vacuum. The outlet flow path 308 provides an exit or exhaust flow path for gases and volatile compounds generated during an evaporation process. Each of the inlet flow paths 306 includes an inlet 310 defined on the body exterior surface 304, and an outlet 312. The outlet flow path 308 includes an outlet 314 defined on the body exterior surface 304, and an inlet 316. The inlet flow path outlets 312 and the outlet flow path inlet 316 are positioned on the closure 204 such that, when the closure 204 is connected to the container 202, the inlet flow path outlets 312 and the outlet flow path inlet 316 are in fluid communication with the container interior.

In the illustrated embodiment, the body 302 extends longitudinally along a central longitudinal axis 318 from a first, upper surface 320 to a second, lower surface 322. The body 302 includes four side surfaces 324 extending from the upper surface 320 to the lower surface 322. Each of the side surfaces 324 has a rectangular shape and is generally flat or planar. The upper surface 320, lower surface 322, and four side surfaces 324 define the body exterior surface 304.

The body 302 defines a cavity 326 that extends into the body 302 from the lower surface 322 to a third, interior surface 328. The cavity 326 is sized and shaped to receive a portion of the container 202 therein, such as the neck 210, shoulder portion 214, and/or sidewall 208. In the illustrated embodiment, the cavity 326 is shaped cylindrically, although in other embodiments the cavity 326 may be shaped differently, such as square, rectangular, polygonal, ellipsoidal, or any other shape that enables the closure 204 to function as described herein.

The body 302 includes a shroud 330 that extends from the interior surface 328 to the lower surface 322. The shroud 330 includes a radial inner surface 332 that at least partially defines the cavity 326. The body 302 also includes a container insert 334 that depends from the interior surface 328 and is positioned within the cavity 326. The container insert 334 is sized and shaped to fit within the container opening 212 when the closure 204 is connected to the container 202. As shown in FIGS. 3-5, the shroud 330 of the illustrated embodiment extends axially beyond the container insert 334 and can therefore function as a guide for the closure 204 as the closure 204 is connected to the container 202.

In the illustrated embodiment, the container insert 334 includes an outlet extension 336 depending from a lower surface 338 of the container insert 334. The outlet extension 336 defines the outlet flow path inlet 316. Additionally, the inlet flow path outlets 312 are defined adjacent the lower surface 338 of the container insert 334. The outlet flow path inlet 316 is axially offset from each of the inlet flow path outlets 312 to reduce or minimize interference between incoming gas flow and exiting gas flow. In the illustrated embodiment, the outlet flow path inlet 316 is positioned lower than (i.e., closer to the second, lower surface 322 of the body 302) than the inlet flow path outlets 312. In other embodiments, the inlet flow path outlets 312 may be positioned lower than (i.e., closer to the second, lower surface 322) than the outlet flow path inlet 316. In the illustrated embodiment, the container insert 334 and outlet extension 336 are shaped cylindrically, where the outlet extension 336 has a smaller diameter than the remainder of the container insert 334. In other embodiments, the container insert 334 may be shaped other than cylindrical.

The example closure 204 includes two inlet flow paths 306, and a single outlet flow path 308. In other embodiments, the closure 204 may have fewer than two inlet flow paths 306 (e.g., one inlet flow path), or greater than two inlet flow paths 306 (e.g., three inlet flow paths, four inlet flow paths, etc.). Additionally, the closure 204 may have more than one outlet flow path 308 in other embodiments.

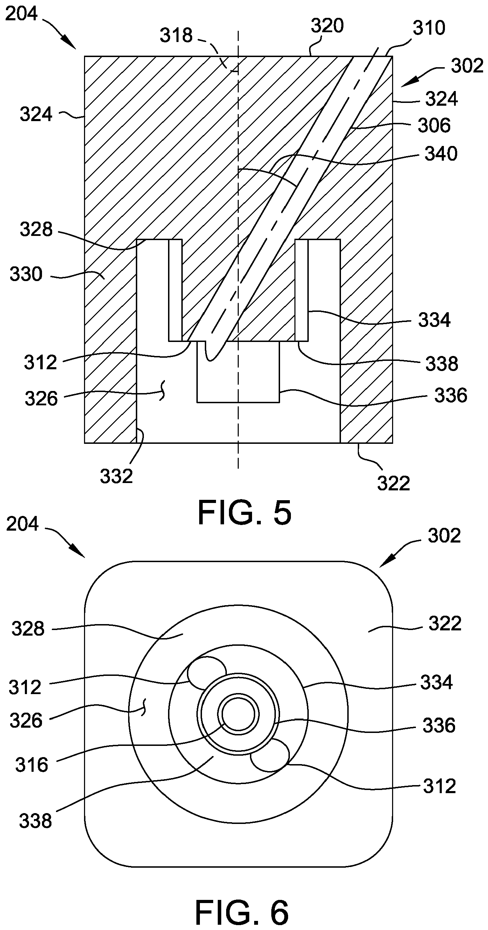

As shown in FIGS. 3 and 5, each of the inlet flow paths 306 extends from the body exterior surface 304, through the body 302, into communication with the cavity 326. In the illustrated embodiment, the inlet flow path inlets 310 are defined on the upper surface 320, and the inlet flow path outlets 312 are defined along the lower surface 338 of the container insert 334. In other embodiments, the inlet flow path inlets 310 and outlets 312 may be defined along any other suitable portion of the body 302 that enables the closure 204 to function as described herein.

As noted above, the inlet flow paths 306 are configured as vortex generating features to facilitate evaporation of a liquid within the container 202. More specifically, the inlet flow paths 306 are oriented at suitable angles and positioned at suitable locations on the closure 204 such that gas flow directed through the inlet flow paths 306 creates a vortex air or gas flow within the container 202. In the illustrated embodiment, each inlet flow path 306 is oriented at an oblique angle 340 (FIG. 5) relative to the central longitudinal axis 318, and is radially offset from the central longitudinal axis 318. Each inlet flow path 306 is oriented at an angle 340 of about 30° relative to the central longitudinal axis 318 in the illustrated embodiment, although the inlet flow paths 306 may be oriented at an angle other than 30° in other embodiments. For example, each inlet flow path 306 may be oriented relative to the central longitudinal axis 318 at an angle of between between 5° and 75°, between 5° and 60°, between 15° and 70°, between 5° and 45°, between 15° and 55 °, between 25° and 65°, between 5° and 35°, between 15° and 45°, between 25° and 55°, between 35° and 65°, between 10° and 30°, between 20° and 40°, between 30° and 50°, or between 40° and 60°. Additionally, each inlet flow path 306 extends linearly from the inlet flow path inlet 310 to the inlet flow path outlet 312. In other embodiments, one or more of the inlet flow paths 306 may extend non-linearly, such as in a curvilinear or spiral configuration. The inlet flow paths 306 are also spaced uniformly about the central longitudinal axis 318 in a circumferential direction to provide balanced gas flow into the container 202. For example, as shown in FIGS. 3 and 6, the inlet flow path inlets 310 and outlets 312 are spaced evenly about the central longitudinal axis 318 in the circumferential direction. The illustrated embodiment includes two inlet flow paths 306, so the inlet flow paths 306 and their associated inlets 310 and outlets 312 are positioned diametrically opposite one another.

The outlet flow path 308 is parallel to and coaxial with the central longitudinal axis 318 in the example embodiment. In other embodiments, the outlet flow path 308 may be other than parallel to and/or coaxial with the central longitudinal axis 318.

When the closure 204 is connected to a container, such as the container 202, and gas is directed through the inlet flow paths 306 and the outlet flow path 308, a vortex is generated within the container 202, as illustrated by arrows 216 in FIG. 2. The vortex creates centrifugal forces inside the container 202, which increases the surface area of the radioactive liquid and thereby accelerates the evaporation process.

Gas flow may be directed through the inlet flow paths 306 and outlet flow path 308 using the gas handling system 106 (shown in FIG. 1). In some embodiments, for example, the suction line 122 is connected to the outlet flow path outlet 316, and the gas supply lines 126 are connected to the inlet flow path inlets 310. In other embodiments, only the suction line 122 is connected to the closure 204, and ambient gas (e.g., within the containment chamber 102) flows through the inlet flow paths 306 as a result of a negative pressure differential generated within the container 202 by the suction line 122. In such embodiments, the gas supply lines 126 may be omitted. The inlet flow path inlets 310 and the outlet flow path outlet 316 may include suitable adapters, couplers, or be otherwise configured for coupling to the gas supply lines 126 and suction line 122, respectively. For example, one or more of the inlet flow path inlets 310 and the outlet flow path outlet 316 can be threaded (e.g., with a 10-32 or 10-24 type thread) to facilitate threadably coupling an adapter to the respective inlet or outlet. Additionally, the inlet flow path 306 may include one or more filters positioned therein to filter incoming gas flow. The filters can be connected to the inlet flow path inlets 310 with suitable adapters or couplers, such as a Luer adapter.

The closure 204 seals against a portion the container 202 such that gas flow into and out of the container is permitted only through the inlet flow paths 306 and the outlet flow path 308. The closure 204 may include one or more seals or sealing materials to facilitate forming a seal against the container 202. In some embodiments, for example, the closure 204 may include one or more elastomeric seals (e.g., O-rings) that engage a portion of the container 202 to form a seal therewith when the closure 204 is inserted over the top of the container 202. The elastomeric seals may be positioned and held in place within grooves defined in the closure body 302. In some embodiments, for example, the body 302 has a groove defined along the radial inner surface 332 of the shroud 330, and an elastomeric seal is positioned within the groove such that the seal engages the shoulder portion 214 and/or sidewall 208 of the container 202 to form a seal against the container 202. Additionally or alternatively, the interior surface 328 and/or a radial outer surface of the container insert 334 may include a groove and an elastomeric seal positioned therein to facilitate forming a seal between the closure 204 and the container 202.

The closure 204 of the illustrated embodiment is particularly suited for use in a radioactive environment (e.g., in the production of radionuclides and radionuclide precursors). For example, the closure 204 is constructed of materials resistant to both radiation degradation and corrosive gases evaporated during an evaporation process (e.g., HCl gas and water). Suitable materials include, for example and without limitation, polytetrafluoroethylene (e.g., Teflon^{™}), perfluoroalkoxy alkanes, fluorinated polymers, polycarbonate, polylactic acid, polyether ether ketone (PEEK), polyoxymethylene (e.g., Delrin^{®}), glass, metal alloys (e.g., stainless steel), plated or coated alloys (e.g., stainless steel coated with ethylene chlorotrifluoroethylene (e.g., Halar^{®})), and combinations thereof. The closure 204 may also be free of metals that might otherwise corrode in the presence of gases evaporated during an evaporation process. The closure 204 can be constructed using various methods, including, for example and without limitation, machining, casting, molding, additive manufacturing (e.g., 3D printing), and combinations thereof. Additionally, the closure 204 is designed to facilitate movement by a remote manipulator, such as the telemanipulators, which are used in high radiation environments (e.g., radiation containment chamber 102) to limit an operator's exposure to nuclear radiation (e.g., gamma radiation). More specifically, the closure 204 includes at least one pair of opposing flats 342 (FIG. 3) - i.e., flat or planar external surfaces of the body 302 that are oriented parallel to one another and located on opposite sides of the body 302. The opposing flats 342 facilitate firmly grasping the closure 204 with mechanical fingers or clamps typically used with remote manipulators. The closure 204 can therefore be easily grasped with a remote manipulator, and moved to a desired location within a hot cell. In the illustrated embodiment, the closure 204 has a substantially rectangular cross section (i.e., rectangular, pseudo-rectangular, square, pseudo-square) when viewed orthogonal to the central longitudinal axis 318, and includes two pairs of opposing flats 342. In other embodiments, the closure 204 may have a cross-section other than substantially rectangular. Additionally, because the shroud 330 extends axially beyond the container insert 334, the shroud 330 functions as a guide for the closure 204, aligning the closure 204 with the container 202 as the closure 204 is connected to the container 202. The shroud 330 thereby facilitates insertion of the container insert 334 within the container opening 212 and connection of the closure 204 to the container 202 with the remote manipulator 108.

In use, the closure 204 is connected to the container 202 during an evaporation process to facilitate evaporation of a liquid (e.g., radioactive liquid 112, shown in FIG. 1) within the container 202. More specifically, the container 202 is positioned within the radiation containment chamber 102, such as within or adjacent to the evaporation station 104. The closure 204 is connected to the container 202, using the remote manipulator 108, such that the closure 204 seals against the container 202. As noted above, the flats 342 of the closure 204 facilitate grasping the closure 204 with the remote manipulator 108, and the shroud 330 facilitates guiding the closure 204 onto the container 202. The closure 204 may seal against the container 202 along the sidewall 208, shoulder portion 214, neck 210, and/or any other suitable portion of the container 202. In some embodiments, for example, an O-ring positioned within a groove of the shroud 330 sealingly engages the sidewall of the container 202. The closure 204 thereby provides a closed system to inhibit or prevent the introduction of environmental contaminants (e.g., trace metallic contaminants) into the container 202 and the liquid contained therein.

Gas is then directed through the container 202 using, for example, the gas handling system 106. In particular, gas flows into the container 202 through the inlet flow paths 306, and out of the container 202 through the outlet flow path 308. Gas flow is directed through the inlet flow paths 306 such that a vortex fluid flow is generated within the container 202. As noted above, for example, the inlet flow paths 306 in the illustrated embodiment are configured as vortex-generating features such that the inlet flow paths 306 generate a vortex air flow (illustrated by arrows 216 in FIG. 2) within the container 202 when the closure 204 is connected to the container 202 and gas is directed through the inlet flow paths 306. The vortex creates centrifugal forces inside the container 202, which increases the surface area of the liquid and thereby accelerates the evaporation process. Gas flowing into the container 202 may be filtered, for example, by one or more filters positioned in and/or adjacent to the inlet flow paths 306.

The suction line 122 and/or gas supply lines 126 of the gas handling system 106 may be connected to the closure 204 prior to the closure 204 being connected to the container 202. For example, the gas supply lines 126 and/or suction line 122 may be connected to the closure 204 manually by a human operator, prior to the closure 204 being introduced into the radiation containment chamber 102, and/or prior to the radiation containment chamber 102 being exposed to radioactive material. Alternatively, the suction line 122 and/or gas supply lines 126 may be connected to the closure 204 while the closure 204 is within the radiation containment chamber 102 (e.g., using the remote manipulator 108).

The liquid within the container 202 is heated (e.g., using the hot plate 118) while gas flows through the container 202. The vortex air flow generated by the closure 204 within the container 202 facilitates evaporation of the liquid by increasing the surface area of the liquid during the evaporation process. Once a desired amount of liquid has evaporated from the container 202, the closure 204 may be removed from the container 202 (e.g., using the remote manipulator 108) and the container 202 may be moved to another area of the radiation containment chamber 102 or a separate radiation containment chamber for further processing.

When introducing elements of the present invention or the embodiment(s) thereof, the articles "a", "an", "the" and "said" are intended to mean that there are one or more of the elements. The terms "comprising", "including" and "having" are intended to be inclusive and mean that there may be additional elements other than the listed elements.

As various changes could be made in the above constructions and methods without departing from the scope of the invention, it is intended that all matter contained in the above description and shown in the accompanying drawings shall be interpreted as illustrative and not in a limiting sense. The invention is defined by the appended claims.

## Claims

1. A closure (204) for a container (202), the closure comprising:
a body (302) extending longitudinally along a central longitudinal axis (318) from a first, upper surface (320) to a second, lower surface (322), the body defining a cavity (326) extending into the body from the lower surface to a third, interior surface (328), wherein the cavity is sized and shaped to receive a portion of the container therein, wherein the body includes:
a shroud (330) extending from the interior surface to the lower surface;
a container insert (334) depending from the interior surface and positioned within the cavity, the container insert sized and shaped to fit within an opening (212) of the container;
an outlet flow path (308) in fluid communication with the cavity; and
at least one inlet flow path (306) in fluid communication with the cavity, the at least one inlet flow path positioned and oriented to generate a vortex gas flow within the container when connected thereto;
**characterised in that**
each of the at least one inlet flow path is oriented at an oblique angle relative to the central longitudinal axis of the body and radially offset from the central longitudinal axis.

2. The closure of claim 1, wherein each of the at least one inlet flow path is oriented at an angle of between 15° and 45° relative to the central longitudinal axis.

3. The closure of claim 1, wherein each of the at least one inlet flow path has an inlet (310) defined at the upper surface and an outlet (312) defined at the container insert.

4. The closure of claim 1, wherein the container insert includes an outlet extension (336) depending from a lower surface (338) of the container insert, wherein the outlet extension defines an inlet (316) of the outlet flow path, and wherein an outlet (312) of each of the at least one inlet flow path is defined adjacent the lower surface of the container insert.

5. The closure of claim 1, wherein the outlet flow path is parallel to and coaxial with the central longitudinal axis.

6. The closure of claim 1, wherein the body is constructed of a fluorinated polymer and has a substantially rectangular cross section.

7. The closure of claim 1, wherein the body includes a pair of opposing flats (342) extending from the upper surface (320) to the lower surface (322).

8. A system (100) comprising:
a radiation containment chamber (102);
a remote manipulator (108) connected to the radiation containment chamber;
a container (202) positioned within an interior (116) of the radiation containment chamber;
the closure of claim 1 connected to the container;
an evaporation station (104) positioned within the interior of the radiation containment chamber and comprising at least one heating element (118) for applying heat to the container; and
a gas handling system (106) comprising a suction line (122) connected to an outlet (314) of the outlet flow path, wherein the at least one inlet flow path generates a vortex gas flow within the container when suction is applied to the container by the suction line.

9. The system of claim 8, wherein the container has a radioactive liquid (112) disposed therein.

10. The system of claim 9, wherein the radioactive liquid comprises one of a radionuclide precursor solution and a radiolabeled compound.

11. The system of claim 8, wherein the remote manipulator is a telemanipulator.

12. The system of claim 11, wherein the telemanipulator includes:
an operator controller (136) positioned outside of the radiation containment chamber; and
an end effector (140) positioned within the radiation containment chamber, wherein the operator controller controls at least one of a position, an orientation, and a state of the end effector.

13. A method comprising:
providing, within a radiation containment chamber (102), a container (202) having a radioactive liquid (112) disposed therein;
connecting, using a remote manipulator (108), the closure of claim 1 to the container such that the closure seals against the container; and
directing a flow of gas through the at least one inlet flow path of the closure to generate a vortex gas flow within the container.

14. The method of claim 13 further comprising heating the radioactive liquid.

15. The method of claim 13, wherein the radioactive liquid comprises one of a radionuclide precursor solution and a radiolabeled compound.

## Patentansprüche

1. Verschluss (204) für einen Behälter (202), wobei der Verschluss Folgendes umfasst:
einen Körper (302), der sich in Längsrichtung entlang einer zentralen Längsachse (318) von einer ersten, oberen Fläche (320) zu einer zweiten, unteren Fläche (322) erstreckt, wobei der Körper einen Hohlraum (326) definiert, der sich von der unteren Fläche zu einer dritten, inneren Fläche (328) in den Körper hinein erstreckt, wobei der Hohlraum so bemessen und geformt ist, dass er einen Teil des Behälters darin aufnimmt, wobei der Körper Folgendes umfasst:
eine Ummantelung (330), die sich von der inneren Fläche zur unteren Fläche erstreckt;
einen Behältereinsatz (334), der von der inneren Fläche herabhängt und innerhalb des Hohlraums angeordnet ist, wobei der Behältereinsatz so bemessen und geformt ist, dass er in eine Öffnung (212) des Behälters passt;
einen Auslassströmungsweg (308), der in Fluidverbindung mit dem Hohlraum steht, und
mindestens einen Einlassströmungsweg (306), der in Fluidverbindung mit dem Hohlraum steht, wobei der mindestens eine Einlassströmungsweg (306) so positioniert und ausgerichtet ist, dass er eine Wirbelgasströmung innerhalb des Behälters erzeugt, wenn er mit diesem verbunden ist;
**dadurch gekennzeichnet,**
**dass** jeder des mindestens einen Einlassströmungsweges in einem schrägen Winkel relativ zu der zentralen Längsachse des Körpers und radial versetzt von der zentralen Längsachse ausgerichtet ist.

2. Verschluss nach Anspruch 1, wobei jeder des mindestens einen Einlassströmungsweges in einem Winkel zwischen 15° und 45° relativ zu der zentralen Längsachse ausgerichtet ist.

3. Verschluss nach Anspruch 1, wobei jeder des mindestens einen Einlassströmungsweges einen an der oberen Fläche definierten Einlass (310) und einen an dem Behältereinsatz definierten Auslass (312) aufweist.

4. Verschluss nach Anspruch 1, wobei der Behältereinsatz eine Auslassverlängerung (336) aufweist, die von einer unteren Fläche (338) des Behältereinsatzes herabhängt, wobei die Auslassverlängerung einen Einlass (316) des Auslassströmungsweges definiert, und wobei ein Auslass (312) von jedem des mindestens einen Einlassströmungsweges angrenzend an die untere Fläche des Behältereinsatzes definiert ist.

5. Verschluss nach Anspruch 1, wobei der Auslassströmungsweg parallel zu und koaxial mit der zentralen Längsachse verläuft.

6. Verschluss nach Anspruch 1, wobei der Körper aus einem fluorierten Polymer hergestellt ist und einen im Wesentlichen rechteckigen Querschnitt aufweist.

7. Verschluss nach Anspruch 1, wobei der Körper ein Paar von gegenüberliegenden Abflachungen (342) aufweist, die sich von der oberen Fläche (320) zu der unteren Fläche (322) erstrecken.

8. System (100), das Folgendes umfasst:
eine Strahlungsschutzkammer (102);
einen Fernmanipulator (108), der mit der Strahlungsschutzkammer verbunden ist;
einen Behälter (202), der in einem Innenraum (116) der Strahlungsschutzkammer angeordnet ist;
den Verschluss nach Anspruch 1, der mit dem Behälter verbunden ist;
eine Verdampfungsstation (104), die in dem Innenraum der Strahlungsschutzkammer angeordnet ist und mindestens ein Heizelement (118) zum Aufbringen von Wärme auf den Behälter enthält; und
ein Gashandhabungssystem (106), das eine Saugleitung (122) umfasst, die mit einem Auslass (314) des Auslassströmungswegs verbunden ist, wobei der mindestens eine Einlassströmungsweg eine Wirbelgasströmung innerhalb des Behälters erzeugt, wenn durch die Saugleitung ein Sog auf den Behälter ausgeübt wird.

9. System nach Anspruch 8, wobei der Behälter eine darin befindliche radioaktive Flüssigkeit (112) aufweist.

10. System nach Anspruch 9, wobei die radioaktive Flüssigkeit entweder eine Radionuklid-Vorläufer-Lösung oder eine radioaktiv markierte Verbindung enthält.

11. System nach Anspruch 8, wobei der Fernmanipulator ein Telemanipulator ist.

12. System nach Anspruch 11, wobei der Telemanipulator Folgendes umfasst:
eine Bedienersteuerung (136), die außerhalb der Strahlungsschutzkammer angeordnet ist; und
einen Endeffektor (140), der innerhalb der Strahlungsschtzkammer angeordnet ist, wobei die Bedienersteuerung mindestens eine der Positionen, einer Ausrichtung und einem Zustand des Endeffektors, steuert.

13. Verfahren, das Folgendes umfasst:
das Bereitstellen eines Behälters (202) mit einer darin befindlichen radioaktiven Flüssigkeit (112) in einer Strahlungsschutzkammer (102);
das Verbinden des Verschlusses nach Anspruch 1 mit dem Behälter unter Verwendung eines Fernmanipulators (108), so dass der Verschluss gegen den Behälter abdichtet; und
das Leiten eines Gasstroms durch den mindestens einen Einlassströmungsweg des Verschlusses, um einen Wirbelgasstrom innerhalb des Behälters zu erzeugen.

14. Verfahren nach Anspruch 13, ferner umfassend das Erhitzen der radioaktiven Flüssigkeit.

15. Verfahren nach Anspruch 13, wobei die radioaktive Flüssigkeit entweder eine Radionuklid-Vorläufer-Lösung oder eine radioaktiv markierte Verbindung umfasst.

## Revendications

1. Fermeture (204) d'un conteneur (202), la fermeture comprenant un corps (302) s'étendant longitudinalement suivant un axe central longitudinal (318) à partir d'une première surface supérieure (320) vers une seconde surface inférieure (322), le corps formant une cavité (326) dans le corps à partir de la surface inférieure jusqu'à une troisième surface intérieure (328),
la cavité étant dimensionnée et formée pour recevoir une partie du conteneur,
le corps comprenant :
- une enveloppe (330) partant de la surface intérieure jusqu'à la surface inférieure,
- un insert de conteneur (334) dans la cavité en saillie à partir de la surface intérieure, l'insert de conteneur étant dimensionné et formé pour s'adapter à une ouverture (212) du conteneur,
- un chemin d'écoulement de sortie (308) en liaison fluidique avec la cavité, et
- au moins un chemin d'écoulement d'entrée (306) en liaison fluidique avec la cavité, au moins ce chemin d'écoulement d'entrée étant positionné et orienté pour générer un flux de gaz tourbillonnaire dans le conteneur lorsqu'il est relié à celui-ci,
fermeture **caractérisée en ce que**
chacun d'au moins ce chemin d'écoulement d'entrée est orienté suivant un angle optique par rapport à l'axe longitudinal central du corps et un décalage radial par rapport à l'axe longitudinal central.

2. Fermeture selon la revendication 1,
selon laquelle
chacun d'au moins ce chemin d'écoulement d'entrée est orienté suivant un angle compris entre 15° et 45° par rapport à l'axe longitudinal central.

3. Fermeture selon la revendication 1,
selon laquelle
chacun d'au moins ce chemin d'écoulement d'entrée a une entrée (310) dans la surface supérieure et une sortie (312) définie sur l'insert de conteneur.

4. Fermeture selon la revendication 1,
dans laquelle
l'insert de conteneur comprend une extension de sortie (336) en relief de la surface inférieure (338) de l'insert de conteneur,
l'extension de sortie définissant une entrée (316) pour le chemin d'écoulement de sortie, et
- une sortie (312) de chacun d'au moins ce chemin d'écoulement d'entrée est défini adjacent à la surface inférieure de l'insert de conteneur.

5. Fermeture selon la revendication 1,
dans laquelle
le chemin d'écoulement de sortie est parallèle et coaxial à l'axe central longitudinal.

6. Fermeture selon la revendication 1,
dans laquelle
le corps est en polymère fluoré et a une section sensiblement rectangulaire.

7. Fermeture selon la revendication 1,
dans laquelle
le corps a une paire de plats opposés (342) partant de la surface supérieure (320) jusqu'à la surface inférieure (322).

8. Système (100) comprenant :
- une chambre de confinement de rayonnement (102),
- un manipulateur à distance (108) relié à la chambre de confinement de rayonnement,
- un conteneur (202) dans l'intérieur (116) de la chambre de confinement de rayonnement,
- la fermeture de la revendication 1 reliée au conteneur,
- un poste d'évaporation (104) à l'intérieur de la chambre de confinement de rayonnement et ayant au moins un élément de chauffage (118) pour chauffer le conteneur, et
- un système de traitement de gaz (106) comportant une conduite d'aspiration (122) relié à la sortie (314) du chemin d'écoulement de sortie, au moins ce chemin d'écoulement d'entrée générant un écoulement tourbillonnaire de gaz dans le conteneur lorsqu'une dépression est appliquée au conteneur par la conduite d'aspiration.

9. Système selon la revendication 8,
dans lequel
le conteneur contient un liquide radioactif (112).

10. Système selon la revendication 9,
dans lequel
le liquide radioactif est un liquide choisi parmi une solution de précurseur de radionucléides et un composé radiomarqué.

11. Système selon la revendication 8,
dans lequel
le manipulateur à distance est un télémanipulateur.

12. Système selon la revendication 11,
dans lequel
le télémanipulateur comprend :
- une commande d'opérateur (136) située à l'extérieur de la chambre de confinement de radiation, et
- un actionneur terminal (140) placé dans la chambre de confinement de radiation, la commande d'opérateur commandant au moins une position et une orientation ou un état de l'actionneur terminal.

13. Procédé consistant à :
- fournir une chambre de confinement de radiation (102), un conteneur (202) avec un liquide radioactif (112),
- relier en utilisant le manipulateur à distance (108), la fermeture de la revendication 1 pour le conteneur de façon que la fermeture réalise la fermeture étanche du conteneur, et
- diriger un flux de gaz sur au moins le chemin de flux d'entrée de la fermeture pour générer un flux de gaz tourbillonnaire dans le conteneur.

14. Procédé selon la revendication 13,
consistant en outre
à chauffer le liquide radioactif.

15. Procédé selon la revendication 13,
selon lequel
le liquide radioactif contient l'un des liquides :
une solution de précurseur de radio-nucléides et un composé radio-marqué.
